(19) **Europäisches Patentamt**
**European Patent Office**
**Office européen des brevets**

(11) **EP 3 113 313 B1**

(12) **EUROPEAN PATENT SPECIFICATION**

(45) Date of publication and mention
of the grant of the patent:
**14.11.2018  Bulletin 2018/46**

(51) Int Cl.:
*H02J 3/00* *(2006.01)*   *H02J 3/38* *(2006.01)*

(21) Application number: **15398009.9**

(22) Date of filing: **30.06.2015**

(54) **METHOD OF CONTROL FOR ELECTRIC POWER MICRONETWORKS AND SYSTEM FOR IMPLEMENTING IT**

VERFAHREN ZUR STEUERUNG VON ELEKTRISCHEN MIKRONETZWERKEN UND SYSTEM ZUR IMPLEMENTIERUNG DAVON

MÉTHODE DE CONTRÔLE POUR MICRO-RÉSEAUX D'ÉNERGIE ÉLECTRIQUE ET SYSTÈME LA METTANT EN OEUVRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.06.2015  PT 15108600**

(43) Date of publication of application:
**04.01.2017  Bulletin 2017/01**

(73) Proprietor: **Instituto Superior de Engenharia do Porto**
**4249-015 Porto (PT)**

(72) Inventors:
• **Almeida Do Vale, Zita Maria**
**4249-015 PORTO (PT)**

• **Silva Faria, Pedro Nuno**
**4249-015 PORTO (PT)**
• **De Oliveira Gomes, Luis Filipe**
**4249-015 PORTO (PT)**

(74) Representative: **Pereira da Cruz, Joao**
**J. Pereira da Cruz, S.A.**
**Rua Victor Cordon, 10-A**
**1249-103 Lisboa (PT)**

(56) References cited:
**US-A1- 2011 082 596    US-A1- 2012 010 757**
**US-A1- 2012 065 792    US-A1- 2013 282 194**
**US-B2- 8 825 219**

**Description**

**FIELD OF THE INVENTION**

The present invention belongs to the field of electrical microgrids management, where typically exist consuming and generation units, as well as the possible integration of local generation elements, as the case of devices which convert energy from natural sources, commonly referred as renewable energy sources, and with the possibility of integrating energy storage devices.

The present invention includes an innovative method and system that implements it, for it allows better control and management of the electrical microgrid, by integrating diverse real and virtual/computational means in the optimization of the microgrid operation.

**DESCRIPTION OF PRIOR ART**

The present invention has as prior art electrical networks automatic control systems, more specifically microgrids, and in microgrid operation simulation systems.

In prior art are known systems that, according to algorithms of greater or lesser complexity, control the electrical energy consumption and generation operation, based on a set of predefined conditions.

However, a control system typically only comprises one or more computational entities managing the electrical network and the generation and consumption elements, regulating the network behaviour according to the already referred predefined parameters.

Moreover, microgrid simulation systems are also known, which support the installation, regulation and human maintenance of real networks, through the prediction of the network behaviour, by simulation means.

The patent application with publication number US 20120316688 A1 is an example of the first type, in which the electrical network operation is managed using algorithms that consider the real network data.

An example of the second type is the patent application with publication number US2013253718 A1, in which the microgrid is modelled and its behaviour simulated, for regulating the microgrid in a later phase, through operator intervention. Moreover the following patent application are identified: Patent application with publication nr. US 2012/0010757 discloses an energy management system which uses a numerical solver for reducing energy costs in a plant, and is especially applicable to plants that require or are capable of using and/or producing different types of energy at different times. Such numerical solver uses the models to simulate or model the operation of the plant 11 at various different operating points, such models being elements which model, simulate or describe the operation of each of the energy users 20, the energy producers 22 and the energy storage systems 24 within the plant 11. Particularly, in the wording of the claims. Said patent application does not discloses that each simulated element are consisting of an equipment not installed in the microgrid but whose behaviour is simulated.

Patent application with publication nr. US 2013/0282194 discloses a method for simulating the performance of a microgrid which includes several levels of modelling, all such levels being based on data of a physical system under investigation.

Patent application with publication nr. US 2012/0065792 discloses a supply-demand balance controller in a smart grid for creating an electric supply plan, such controller comprising several elements, including a "first storage" and a "first predicting unit", the first storage storing a history of the power demand of each customer and the first predicting unit predicting a power demand by each customer in the predetermined period, based on the history in the first storage.

Patent application with publication nr. US 2011/0082596 discloses a method for providing a microgrid power analytics portal, such portal being configured to collect and aggregate real-time data from sensors and including a real-time model and a virtual model of the microgrid, the real-time model representing a current state of the electrical system that can be developed by collecting data from sensors interfaced with the various components of the electrical system and the virtual model of the electrical system mirroring the real-time model and being used to generate predictions regarding the performance, availability, and reliability of cost and reliability of various distributed energy sources and to predict the price of acquiring energy from these sources. Patent application with publication nr. US 2013/0178991 discloses an energy management system in which energy loads are maximised using a value function for each load and outputting optimal control parameter per load.

In the present invention, the intention was to create a method and system that implements it that include in its management features both data from the network and data from simulation, aiming at predicting and adapting the future network behaviour. The invention is defined by the features of the independent claims 1 and 13. Preferred embodiments are defined in the dependent claims.

None of the documents in the prior art reveal such feature association, not revealing, moreover, the emulation ability regarding the simulated data and its association with the real network data, aiming at optimizing the network operation, through the resource scheduling.

Therefore, the present method and system allow the simulation of an existing microgrid through a hybrid platform that integrates software and hardware components which make possible to include real electric equipment in the simulation platform, considering their interaction and mutual influences between this platform and the external facilities and networks connected to it, in a realistic way.

Additionally, it allows the simulation of operation changes in the existing microgrid, as well as the prediction of its operation in a large spectrum of case studies and scenarios, supported by real data repositories.

The present invention allows the analysis of the microgrid operation performance in a diversity of realistic operation scenarios including several scenario evolution options. With this analysis, the performed simulation allows to obtain results concerning the operation optimization.

## SUMMARY OF THE INVENTION

It is, in this way, the object of the present invention a method for the control of ate least one electrical microgrid which comprises the following steps:

a) acquisition of data from at least one generation sensor (2) associated to each electrical energy generation element (1) installed in the microgrid;

b) acquisition of data from at least one consumption sensor (4) associated to each electrical energy consumption element (3) installed in the microgrid;

c) simulation in computational means (9) of at least one simulated element of electrical network, through the modelling of said simulated element, being each simulated element represented by a computational agent, each simulated element consisting of an equipment not installed in the microgrid but whose behaviour is simulated;

d) representation in computational means (9) of each electrical energy generation element (1) installed in the microgrid and each electrical energy consumption element (3) installed in the microgrid by a computational agent, through the data acquired from said at least one generation sensor (2) and said at least one consumption sensor (4) associated to each of them;

e) having as input the computational agent representations from steps c) and d), maximization in computational means (9) of an objective function which consists on the sum of the following components:

i) the power from all the external elements of energy supply (7);

ii) the power of all the generation components, which includes all the energy generation elements (1) and simulated generation elements (5);

iii) the power from all the consumption components, which includes all the energy consumption elements (3) and simulated consumption elements (6) ;

iv) the power from all the means for energy storage (8);

f) actuation on the available resources, scheduling them, according to the result obtained in step e).

Such process allows the microgrid operation optimization, through scheduling, taking into account the knowledge concerning the future microgrid operation conditions, by means of simulation and its integration with real data.

Exemplifying, a generation component may consist on an energy generation element (1) - therefore a real equipment installed in the microgrid - or on a simulated generation element (5) - therefore an equipment not installed in the microgrid but whose behaviour is simulated.

In the same way, and exemplifying, a consumption component may consist on an energy consumption element (3) - therefore a real equipment installed in the microgrid - or on a simulated consumption element (6) - therefore an equipment not installed in the microgrid but whose behaviour is simulated.

In yet another innovative facet, possibly cumulative or alternative to the previous ones, the simulation step c), further comprises the steps of:

- emulation in means for emulation of load and generation of electrical energy (11) of the data resulting from the simulation of at least one simulated element of electrical network;

- check of the obtained results by comparing them with the expected simulation results and, in case of being distinct, activation of means for fault signalization (13).

These innovative features allow to better validate the data that is simulated and used to operate the microgrid, taking into account that one of the main problems in simulation consists on the possible difference between these results and the real operation of the elements that intends to simulate. The use of these devices allows more reliable simulations, taking into account the loads response times, the eventual network disturbances and the influence of the actual voltage value.

Sometimes, the result obtained through simulation is verified as non-technically viable in practice, namely due to transient effects on the operation of the protections. Therefore, the validation in a real load enables the identification of situations of network operation with possible fault, probably leading to cancelling the implementation of a determined implementation measure for the network.

Moreover, the use of the emulation feature allows to verify the result of the implementation of the simulation result, allowing to improve the computational models and enhancing the simulation as a whole.

Additionally, in a configuration of the method of the present invention possibly cumulative to the previous ones, the simulated element consists in at least one of the following elements:

- simulated generation element (5) electrical energy;
- simulated consumption element (6) electrical energy;
- simulated wiring element;
- simulated transformer element;
- simulated external element of energy supply;
- simulated energy storage element.

In another configuration of the method of the present invention, possibly cumulative to the previous ones, the simulation of the at least one simulated element of electrical network, by the modelling of that element, is performed through historic data stored in a database (12).

In a possible configuration, more specific of the previous one, in the case that said at least one of simulated element of electrical network corresponds to a real electrical element installed in the microgrid, the historic data corresponds to an element of the same type installed in the microgrid.

Such features of the method in the present invention clearly support the association of the simulation and real data acquisition features, for optimizing the microgrid operation.

## DESCRIPTION OF THE DRAWINGS

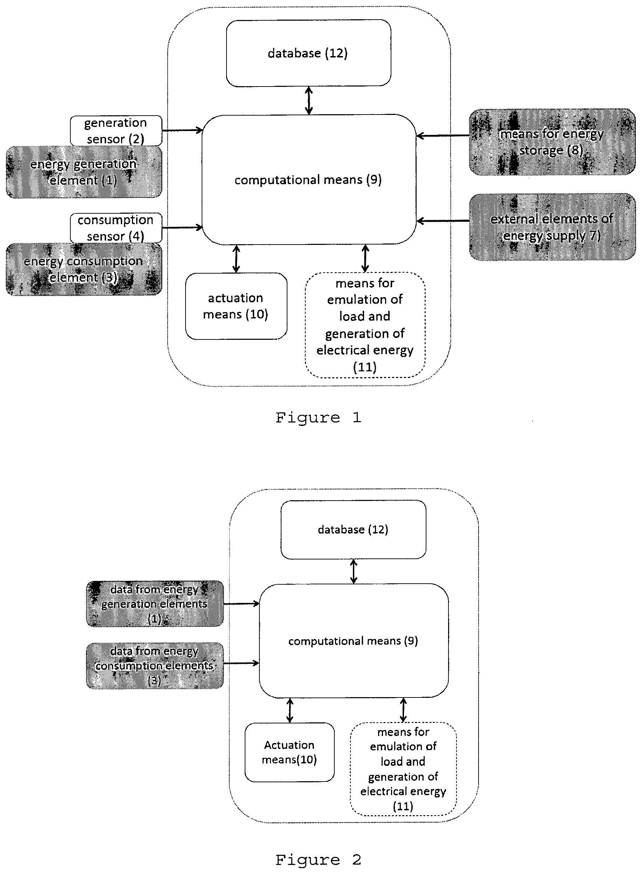

Figure 1 - representation of a possible set of elements of a control system that is within the field of the present invention and of the elements that, not making part of the system, provide information necessary for the implementation of the method of the present invention. In particular, the elements presented inside the doted rectangle are included in the system of the present invention. The component of means for emulation of load and generation of electrical energy (11), making part of a more specific configuration of the system of the present invention, is presented in a dashed box.

Figure 2 - representation in detail of a system that is within the scope of the present invention. The referred for figure 1 also applies.

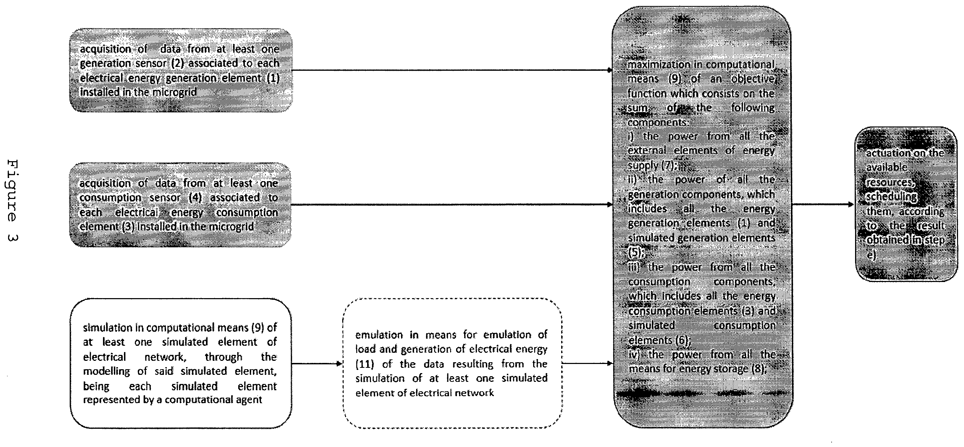

Figure 3 - representation of the method of the present invention, with data acquisition, simulation, possible emulation of the simulation data and maximization of the objective function, which will lead to the actuation of the microgrid components.

## DETAILED DESCRIPTION OF THE INVENTION

As referred, the present invention includes a method for the control of at least one electrical microgrid which includes the following steps:

a) acquisition of data from at least one generation sensor (2) associated to each electrical energy generation element (1) installed in the microgrid;
b) acquisition of data from at least one consumption sensor (4) associated to each electrical energy consumption element (3) installed in the microgrid;
c) simulation in computational means (9) of at least one simulated element of electrical network, through the modelling of said simulated element, being each simulated element represented by a computational agent;
d) representation in computational means (9) of each electrical energy generation element (1) installed in the microgrid and each electrical energy consumption element (3) installed in the microgrid by a computational agent, through the data acquired from said at least one generation sensor (2) and said at least one consumption sensor (4) associated to each of them;

e) having as input the computational agent representations from steps c) and d), maximization in computational means (9) of an objective function which consists on the sum of the following components:

> i) the power from all the external elements of energy supply (7);
> ii) the power of all the generation components, which includes all the energy generation elements (1) and simulated generation elements (5);
> iii) the power from all the consumption components, which includes all the energy consumption elements (3) and simulated consumption elements (6) ;
> iv) the power from all the means for energy storage (8) ;

f) actuation on the available resources, scheduling them, according to the result obtained in step e).

In a possible example of the method of the present invention the scheduling consists, in the energy generation elements (1) standpoint, in the distribution of the electrical energy supplied to the microgrid, defining the actual power supplied by each one of the energy generation elements (1), external elements of energy supply (7) and means for energy storage (8).

In another innovation aspect, possibly cumulative or alternative to the previous ones, the step c) further includes the steps of:

- emulation in means for emulation of load and generation of electrical energy (11) of the data resulting from the simulation of at least one simulated element of electrical network;

- check of the obtained results by comparing them with the expected simulation results and, in case of being distinct, activation of means for fault signalization (13) .

In a specific configuration of the method, cumulative to the previous one, the method of the present invention includes the simulation of the at least one simulated element of electrical network, by the modelling of that element, is performed through historic data stored in a database (12).

In a specific configuration of that previously described, in the case that said at least one of the simulated generation element (5) and/or said at least one simulated consumption element (6) of electrical energy correspond to an energy generation element (1) or energy consumption element (3) installed in the microgrid, the historic data correspond to the that element in the microgrid of the same type.

More specifically, the components in the objective function are summed for all the simulated and the real buses in the microgrid, as well as for all the predefined future periods, and by any of power values in i) to iv) is multiplied by at least one weight parameter. This formulation, as well as the objective function described in detail below, are innovative aspects of the present invention, being independent of the specific configurations previously described in the Detailed description, being however, and naturally, possibly combinable.

The weight parameters are defined by the human operator, the microgrid manager, according to the preference to be given to each resource. The predefined future periods are time intervals - defined in the following equations as t - in which the method of the present invention and the respective system that implements it are operating, being periodic/recurrent and defined by the human operator.

Subsequently the objective function that is intended to be maximized is presented in detail, through its described components i) to iv).

The power of all the generation components is determined by:

$$\sum_{g=1}^{G} \left( P_{(g,b,t)}^{Gen\,2} \times W_{(g,b,t)}^{Gen\_A} + P_{(g,b,t)}^{Gen} \times W_{(g,b,t)}^{Gen\_B} + W_{(g,b,t)}^{Gen\_C} \times X_{(g,b,t)}^{Gen} + P_{(g,b,t)}^{EAP} \times W_{(g,b,t)}^{EAP} \right),$$

where the following symbols represent:

$P^{Gen}_{(g,b,t)}$ the power scheduled for generation component g in bus b, in period t;
$P^{EAP}_{(g,b,t)}$ the excess power available for generation component g in bus b, in period t;
$X^{gen}_{(g,b,t)}$ binary variable related to the use of the generation component g in bus b, in period t;

$W^{EAP}{}_{(g,b,t)}$ the weight parameter related to the excess power available for generation component g in bus b, in period t; $w^{Gen\_A}{}_{(g,b,t)}$ the quadratic weight parameter related to the power of the generation component g in bus b, in period t; $W^{Gen\_B}{}_{(g,b,t)}$ the linear weight parameter related to the power of the generation component g in bus b, in period t; $W^{Gen\_C}{}_{(g,b,t)}$ The base weight parameter related to the power of the generation component g in bus b, in period t.

The power from all the consumption components is determined by:

$$\sum_{c=1}^{C}\left( P^{Red}_{(c,b,t)} \times W^{Red}_{(c,b,t)} + \sum_{i=1}^{I} P^{Shift}_{(c,b,t,i)} \times W^{Shift}_{(c,b,t,i)} + P^{NSD}_{(c,b,t)} \times W^{NSD}_{(c,b,t)} \right),$$

where the following symbols represent:

b each bus in the network;
t each control period of optimization;
i each consumption shifting period;
I the maximum number of consumption shifting periods;
c each consumption component;
C the total number of consumption components;
$W^{NSD}{}_{(c,b,t)}$ the weight parameter related to the non-supplied demand in the consumption component c, in bus b, in period t;
$w^{Red}{}_{(c,b,t)}$ the weight parameter related to the consumption reduction in the consumption component c, in bus b, in period t;
$W^{Shift}{}_{(c,b,t,i)}$ the weight parameter related to the consumption shifting in the consumption component c, in bus b, in period t and for period i;
$P^{NSD}{}_{(c,b,t)}$ the non-supplied scheduled demand in the consumption component c, in bus b, in period t;
$P^{Red}{}_{(c,b,t)}$ the consumption reduction power scheduled for in the consumption component c, in bus b, in period t;
$P^{shift}{}_{(c,b,t,i)}$ the consumption shifting power scheduled in the consumption component c, in bus b, in period t and for period i.

The power from all the means for energy storage (8) is determined by:

$$\sum_{s=1}^{S}\left( P^{Stor\_Dsc}_{(s,b,t)} \times W^{Stor\_Dsc}_{(s,b,t)} - P^{Stor\_Ch}_{(s,b,t)} \times W^{Stor\_Ch}_{(s,b,t)} \right),$$

where the following symbols represent:

*b* each bus in the network;
*t* each control period of optimization;
*s* each means of energy storage (8);
*S* the maximum number of means for energy storage (8); $W^{Stor\_Ch}{}_{(s,b,t)}$ the weight related to the charge of the means for energy storage (8) s, in bus b, in period t; $W^{Stor\_Dsc}{}_{(s,b,t)}$ the weight related to the discharge of the means for energy storage (8) s, in bus b, in period t; $P^{Stor\_ch}{}_{(s,b,t)}$ the scheduled charge power of the means for energy storage (8) s, in bus b, in period t;
$P^{Stor\_Dsc}{}_{(s,b,t)}$ the scheduled discharge power of the means for energy storage (8) s, in bus b, in period t.

To the referred objective function are applied constraints, which can be general or specific, being the specific ones applied to the means for energy storage (8).

**General constraints**

The power balance in any period *t* and in any bus *b* is null, verifying the following relation:

$$\sum_{sp=1}^{SP} P_{(sp,b,t)}^{Main} + \sum_{g=1}^{G} \left( P_{(g,b,t)}^{Gen} - P_{(g,b,t)}^{EAP} \right) + \sum_{c=1}^{C} \left( P_{(c,b,t)}^{Red} + \sum_{i=1}^{I} P_{(c,b,t,i)}^{Shift} + P_{(c,b,t)}^{NSD} - P_{(c,b,t)}^{Demand} \right)$$

$$+ \sum_{s=1}^{S} \left( P_{(s,b,t,i)}^{Stor\_Dsc} - P_{(s,b,t)}^{Stor\_Ch} \right) + \sum_{bk=1}^{NL} \left( P_{(b,k,t)}^{Flow} - P_{(k,l,t)}^{Flow} \right) = 0$$

where the following symbols represent:

$P^{Demand}_{(c,b,t)}$ forecasted demand in the consumption component c, in bus b, and in period t;

$P^{Flow}_{(b,k,t)}$ power flow in bus in period t, in the line connecting bus b to bus k;

$P^{Flow}_{(k,l,t)}$ power flow in bus in period t, in the remote line connecting bus b to bus 1, i.e. all the possible buses in the targeted microgrid.

The following relations are also verified:

$$P_{(c,b,t)}^{Load} = P_{(c,b,t)}^{Demand} - P_{(c,b,t)}^{Red} - \sum_{i=1}^{t} P_{(c,b,t,i)}^{Shift} - P_{(c,b,t)}^{NSD}$$

$$\forall t \in \{1,...,T\};$$
$$\forall i \in \{1,...,I\};$$
$$\forall b \in \{1,...,B\};$$
$$\forall c \in \{1,...,C\}$$

Line thermal limits

$$P_{(b,k,t)}^{Flow} \le P_{(b,k,t)}^{MaxFlow}$$

$$\forall t \in \{1,...,T\};$$
$$\forall bk \in \{1,...,NL\}$$

Limits of the generation units for each $\begin{matrix} t \in \{1,...,T\}; \\ b \in \{1,...,B\}; \\ g \in \{1,...,G\} \end{matrix}$ period t $P_{(g,b,t)}^{MinGen} \le P_{(g,b,t)}^{Gen} \le P_{(g,b,t)}^{MaxGen}$

Maximum limit of the main network supplier $\begin{matrix} r \in \{1,...,I\}; \\ b \in \{1,...,B\}; \\ sp \in \{1,...,SP\} \end{matrix}$ in each period t $P_{(sp,b,t)}^{Main} \le P_{(sp,b,t)}^{MaxMain}$

Limits of demand response programs in each $\begin{matrix} \in \{1,...,I\}; \\ \in \{1,...,T\}; \\ b \in \{1,...,B\}; \\ c \in \{1,...,C\} \end{matrix}$ period t $\begin{matrix} P_{(c,b,t)}^{Red} \le P_{(c,b,t)}^{MaxRed} \\ P_{(c,b,t,i)}^{Shift} \le P_{(c,b,t,i)}^{MaxShift} \end{matrix}$ where the following symbols represent:

$P^{MaxFlow}_{(b,k,t)}$ maximum power flow capacity, in period t, in the line connecting bus b to bus k;

$P^{MaxGen}_{(g,b,t)}$ maximum capacity of the generation component g in bus b in period t;

$P^{MaxMain}_{(sp,b,t)}$ maximum capacity of the main network external element of energy supply (7) sp in bus b in period t;

$P^{MmGen}_{(g,b,t)}$ minimum schedulable capacity of the generation component g in bus b in period t;

$P^{MaxRed}_{(c,b,t)}$ maximum capacity of consumption reduction in the consumption component c, in bus b and period t;

$P^{MaxShift}_{(c,b,t,i)}$ maximum capacity of consumption shifting in the consumption component c, in bus b, period t, and for period i.

**Specific constraints**

The charge and discharge of the means for energy storage (8) are not simultaneous

$$X_{(s,b,t)}^{Stor} + Y_{(s,b,t)}^{Stor} \leq 1$$

$\forall t \in \{1,...,T\};$
$\forall b \in \{1,...,B\};$
$\forall s \in \{1,...,S\};$
$X_{(s,b,t)}^{Stor} \ and \ Y_{(s,b,t)}^{Stor} \in \{0,1\}$

Storage balance determined by the energy resulting from the previous period and of the charge/discharge in the present period

$$E_{(s,b,t)}^{Stor} = E_{(s,b,t-1)}^{Stor} + P_{(s,b,t)}^{Stor\_Ch} \times \Delta t - P_{(s,b,t)}^{Stor\_Dsc} \times \Delta t$$

$\forall t \in \{1,...,T\};$
$\forall b \in \{1,...,B\};$
$\forall s \in \{1,...,S\}$

Charge limit for each unit of means for energy storage (8) considering the unit charge rate

$$P_{(s,b,t)}^{Stor\_Ch} \leq P_{(s,b,t)}^{MaxStor\_Ch} \times Y_{(s,b,t)}^{Stor}$$

$\forall t \in \{1,...,T\};$
$\forall b \in \{1,...,B\};$
$\forall s \in \{1,...,S\}$

Storage charge limit considering the battery balance

$$P_{(s,b,t)}^{Stor\_Ch} \times \Delta t \leq E_{(s,b)}^{Stor\_Capacity} - E_{(s,b,t-1)}^{Stor}$$

$\forall t \in \{1,...,T\};$
$\forall b \in \{1,...,B\};$
$\forall s \in \{1,...,S\}$

Discharge limit for each unit of means for energy storage (8) considering the unit discharge rate

$$P_{(s,b,t)}^{Stor\_Dsc} \leq P_{(s,b,t)}^{MaxStor\_Dsc} \times X_{(s,b,t)}^{Stor}$$

$\forall t \in \{1,...,T\};$
$\forall b \in \{1,...,B\};$
$\forall s \in \{1,...,S\}$

Discharge limit of unit of means for energy storage (8) considering the battery balance

$$P_{(s,b,t)}^{Stor\_Dsc} \times \Delta t \leq E_{(s,b,t-1)}^{Stor}$$

$\forall t \in \{1,...,T\};$
$\forall b \in \{1,...,B\};$
$\forall s \in \{1,...,S\}$

where the following symbols represent:

$X^{Stor}_{(s,b,t)}$ binary variable for the charge of the means for energy storage (8) s in bus b and period t;
$Y^{Stor}_{(s,b,t)}$ binary variable for the discharge of the means for energy storage (8) s in bus b and period t;
$E^{Stor}_{(s,b,t)}$ energy stored in the means for energy storage (8) s in bus b and period t;

$E^{Stor\_capacity}_{(s,b)}$ maximum capacity of the means for energy storage (8) s in bus b and period t;

$P^{MaxStor\_Ch}_{(s,b,t)}$ maximum charge power of the means for energy storage (8) s in bus b and period t;

$P^{Maxstor\_Dsc}_{(s,b,t)}$ maximum discharge power of the means for energy storage (8) s in bus b and period t;

$\Delta t$ elementary optimization period duration.

In a yet more specific configuration of the present invention, each computational agent is defined according to one of the following three types:

- resource agent, corresponding to the computational representation of at least one electrical energy network component;
- low-level aggregation agent, corresponding to the computational representation of a set of at least two resource agents, representing a microgrid;
- high-level aggregation agent, corresponding to the computational representation of a set of at least one element, which can consist in:

  ○ resource agent;
  ○ low-level aggregation agent;
  ○ high-level aggregation agent;

and the simulation of at least one simulated electrical energy network element is performed in real-time or deferred.

The present invention also includes the System of control of electrical energy microgrid which implements the previously described method, in its different variants, and that comprises:

- computational means (9) suitable for the maximization of the objective function and simulation of at least one simulated element of electrical energy;
- actuation means (10) suitable for the scheduling of the available resources;
- at least one database (12), suitable for containing historic data of energy generation elements (1) or energy consumption element (3) or any other elements constituting the microgrid.

In another innovative configuration and possibly cumulative to the previous one, the referred system further comprises means for emulation of load and generation of electrical energy (11), suitable for the emulation of the obtained simulation data from at least one simulated element of electrical energy network and, optionally, means for fault signalization (13).

## PREFERRED EMBODIMENTS

The external elements of energy supply (7) may consist on installed electrical distribution networks.

The energy generation elements (1) may consist on any local energy generation means, as the ones based on renewable sources: wind, solar or any other equivalent, or energy generation means like fuel based generator.

In the same way, a simulated generation element (5) simulates the behaviour of any electrical energy generation device, representing real devices like energy generation elements (1).

The energy consumption elements (3) may consist on any electrical energy devices, as home appliances, electric vehicles, lighting, HVAC, between others.

In the same way, a simulated consumption element (6) simulates the behaviour of any electrical energy consumption device, representing real devices like the energy consumption elements (3).

In the same way, a simulated energy storage element simulates the behaviour of any electrical energy storage device, representing real devices like the means for energy storage (8).

The means for energy storage (8) may consist on supercapacitors, electrochemical batteries or any other equivalent means known in the state-of-art.

A generation sensor (2) will substantially vary with the energy generation element (1) to which is associated with. Examples are the inverters that allow external communication (for example RS-485), electrical energy analysers or hardware specifically developed with capability of communicating with the system of the present invention and with generated power measurement capability.

In the same way, a consumption sensor (4) will substantially vary with the energy consumption element (3) to which is associated with. Examples are the energy analysers, hardware specifically developed with capability of communicating with the system of the present invention and with consumed power measurement capability, or the consumption equipment itself in case that it integrates the referred means of communication.

The means for fault signalization (13) may consist in any visual signalization means, as a light or a message in a display, sound, as a siren or any other sound produced by a computer, or any other that allows signalizing this event.

A simulated transformer element naturally represents a real transformer.

The computational means (9) consist on any type of computational controller, which includes a plurality of analog and/or digital inputs and a plurality of analog and/or digital outputs.

The means for emulation of load and generation of electrical energy (11) may consist on real consumption and generation devices. The use of these devices allows more reliable simulations, taking into account the loads response time, the eventual network disturbances and the influence of the actual voltage value. The platform also integrates hardware for the emulation of wind and photovoltaic generation and for the emulation of electrical energy distribution lines, being possible to change the respective parameters.

The actuation means (10) may consist on digital or analog outputs of a controller, which can include the computational means (9), and that turn on or turn off, according to the scheduling result, the devices installed in the microgrid.

A bus consists on the connection of a set of cables that interconnect different sections of the microgrid, in which different equipment is connected. As for the energy generation elements (1) and simulated generation elements (5), a real bus and a simulated bus are distinguished by the fact that the first one is in fact installed in the microgrid and the second one consists in the modelling of a bus, for purposes of the microgrid behaviours simulation in the conditions that the bus in fact exist.

The technical features constituting the present invention, in its diverse combinations, are suitable for the management of an electrical microgrid, as well as for the use in electrical microgrid control systems.

As it is certainly clear for a person skilled in the art, the present invention should not be limited to the embodiments described in the present document, being possible several changes that still fit the scope of the present invention.

Noticeably, the above presented preferential modes are combinable, in the different possible ways, being the repetition of all those combinations avoided.

## Claims

1. Method of control of at least one electrical microgrid comprising the following steps:

   a) acquisition of data from at least one generation sensor (2) associated to each electrical energy generation element (1) installed in the microgrid;

   b) acquisition of data from at least one consumption sensor (4) associated to each electrical energy consumption element (3) installed in the microgrid;

   c) simulation in computational means (9) of at least one simulated element of electrical network, through the modelling of said simulated element, being each simulated element represented by a computational agent, each simulated element consisting of an equipment not installed in the microgrid but whose behaviour is simulated;

   d) representation in computational means (9) of each electrical energy generation element (1) installed in the microgrid and each electrical energy consumption element (3) installed in the microgrid by a computational agent, through the data acquired from said at least one generation sensor (2) and said at least one consumption sensor (4) associated to each of them;

   e) having as input the computational agent representations from steps c) and d), maximization in computational means (9) of an objective function which consists on the sum of the following components:

      i) the power from all the external elements of energy supply (7);

      ii) the power of all the generation components, which includes all the energy generation elements (1) and simulated generation elements (5);

      iii) the power from all the consumption components, which includes all the energy consumption elements (3) and simulated consumption elements (6);

      iv) the power from all the means for energy storage (8);

   f) actuation on the available resources, scheduling them, according to the result obtained in step e).

2. Method according to the previous claim **characterized in that** step c) comprises the following steps:

   • emulation in means for emulation of load and generation of electrical energy (11) of the data resulting from the simulation of at least one simulated element of electrical network;

   • check of the obtained results by comparing them with the expected simulation results and, in case of being distinct, activation of means for fault signalization (13).

3. Method according to any of the previous claims **characterized in that** the simulated element consists in at least one of the following elements:

   • simulated generation element (5) of electrical energy;
   • simulated consumption element (6) of electrical energy;
   • simulated wiring element;
   • simulated transformer element;
   • simulated external element of energy supply;
   • simulated energy storage element.

4. Method according to any of the previous claims **characterized in that** the simulation of the at least one simulated element of electrical network, by the modelling of that element, is performed through historic data stored in a database (12).

5. Method according to any of the previous claims **characterized in that** the components in the objective function are summed for all the simulated and the real buses in the microgrid, as well as for all the predefined future periods, and by any of power values in i) to iv) is multiplied by at least one weight parameter.

6. Method according to the previous claim **characterized in that** the power from all the generation components is determined by:

$$\sum_{g=1}^{G}\left( P^{Gen\ 2}_{(g,b,t)} \times W^{Gen\_A}_{(g,b,t)} + P^{Gen}_{(g,b,t)} \times W^{Gen\_B}_{(g,b,t)} + W^{Gen\_C}_{(g,b,t)} \times X^{Gen}_{(g,b,t)} + P^{EAP}_{(g,b,t)} \times W^{EAP}_{(g,b,t)} \right),$$

where the following symbols represent:

$P^{Gen}_{(g,b,t)}$ the power scheduled for generation component g in bus b, in period t;
$P^{EAP}_{(g,b,t)}$ the excess power available for generation component g in bus b, in period t;
$X^{gen}_{(g,b,t)}$ binary variable related to the use of the generation component g in bus b, in period t;
$W^{EAP}_{(g,b,t)}$ the weight parameter related to the excess power available for generation component g in bus b, in period t;
$W^{Gen\_A}_{(g,b,t)}$ the quadratic weight parameter related to the power of the generation component g in bus b, in period t;
$W^{Gen\_B}_{(g,b,t)}$ the linear weight parameter related to the power of the generation component g in bus b, in period t;
$W^{Gen\_C}_{(g,b,t)}$ The base weight parameter related to the power of the generation component g in bus b, in period t.

7. Method according to any of the claims 5 and 6 **characterized in that** the power from all the consumption components is determined by:

$$\sum_{c=1}^{C}\left( P^{Red}_{(c,b,t)} \times W^{Red}_{(c,b,t)} + \sum_{i=1}^{I} P^{Shift}_{(c,b,t,i)} \times W^{Shift}_{(c,b,t,i)} + P^{NSD}_{(c,b,t)} \times W^{NSD}_{(c,b,t)} \right),$$

where the following symbols represent:

b each bus in the network;
t each control period of optimization;
i each consumption shifting period;
I the maximum number of consumption shifting periods;
c each consumption component;
C the total number of consumption components;

$W^{NSD}_{(c,b,t)}$ the weight parameter related to the non-supplied demand in the consumption component c, in bus b, in period t;

$W^{Red}_{(c,b,t)}$ the weight parameter related to the consumption reduction in the consumption component c, in bus b, in period t;

$W^{shIft}_{(c,b,t,i)}$ the weight parameter related to the consumption shifting in the consumption component c, in bus b, in period t and for period i;

$P^{NSD}_{(c,b,t)}$ the non-supplied scheduled demand in the consumption component c, in bus b, in period t;

$P^{Red}_{(c,b,t)}$ the consumption reduction power scheduled for in the consumption component c, in bus b, in period t;

$P^{Shift}_{(c,b,t,i)}$ the consumption shifting power scheduled in the consumption component c, in bus b, in period t and for period i.

8. Method according to any of the claims 5 to 7 **characterized in that** the power from all the means for energy storage (8) is determined by:

$$\sum_{s=1}^{S} \left( P^{Stor\_Dsc}_{(s,b,t)} \times W^{Stor\_Dsc}_{(s,b,t)} - P^{Stor\_Ch}_{(s,b,t)} \times W^{Stor\_Ch}_{(s,b,t)} \right),$$

where the following symbols represent:

*b* each bus in the network;
*t* each control period of optimization;
*s* each means of energy storage (8);
*S* the maximum number of means for energy storage (8);
$W^{Stor\_Ch}_{(s,b,t)}$ the weight related to the charge of the means for energy storage (8) s, in bus b, in period t;
$W^{Stor\_Dsc}_{(s,b,t)}$ the weight related to the discharge of the means for energy storage (8) s, in bus b, in period t;
$P^{Stor\_Ch}_{(s,b,t)}$ the scheduled charge power of the means for energy storage (8) s, in bus b, in period t;
$P^{Stor\_Dsc}_{(s,b,t)}$ the scheduled discharge power of the means for energy storage (8) s, in bus b, in period t.

9. Method according to any of the claims 6 to 8 **characterized in that** the power balance in any period t and in any bus *b* is null, verifying the following relation:

$$\sum_{sp=1}^{SP} P^{Main}_{(sp,b,t)} + \sum_{g=1}^{G} \left( P^{Gen}_{(g,b,t)} - P^{EAP}_{(g,b,t)} \right) + \sum_{c=1}^{C} \left( P^{Red}_{(c,b,t)} + \sum_{i=1}^{I} P^{Shift}_{(c,b,t,i)} + P^{NSD}_{(c,b,t)} - P^{Demand}_{(c,b,t)} \right)$$

$$+ \sum_{s=1}^{S} \left( P^{Stor\_Dsc}_{(s,b,t,i)} - P^{Stor\_Ch}_{(s,b,t)} \right) + \sum_{bk=1}^{NL} \left( P^{Flow}_{(b,k,t)} - P^{Flow}_{(k,l,t)} \right) = 0$$

where the following symbols represent:

$P^{Demand}_{(c,b,t)}$ forecasted demand in the consumption component c, in bus b, and in period t;
$P^{Flow}_{(b,k,t)}$ power flow in bus in period t, in the line connecting bus b to bus k;
$P^{Flow}_{(k,l,t)}$ power flow in bus in period t, in the remote line connecting bus b to bus l, i.e. all the possible buses in the targeted microgrid.

10. Method according to any of the claims 6 to 9 **characterized in that** the following relations are respected:

$$P_{(c,b,t)}^{Load} = P_{(c,b,t)}^{Demand} - P_{(c,b,t)}^{Red} - \sum_{i=1}^{I} P_{(c,b,t,i)}^{Shift} - P_{(c,b,t)}^{NSD} \qquad \forall t \in \{1,...,T\};$$

$$\forall i \in \{1,...,I\};$$
$$\forall b \in \{1,...,B\};$$
$$\forall c \in \{1,...,C\}$$

$$P_{(b,k,t)}^{Flow} \leq P_{(b,k,t)}^{MaxFlow} \qquad \forall t \in \{1,...,T\};$$
$$\forall bk \in \{1,...,NL\}$$

$$P_{(g,b,t)}^{MinGen} \leq P_{(g,b,t)}^{Gen} \leq P_{(g,b,t)}^{MaxGen} \qquad \forall t \in \{1,...,T\};$$
$$\forall b \in \{1,...,B\};$$
$$\forall g \in \{1,...,G\}$$

$$P_{(sp,b,t)}^{Main} \leq P_{(sp,b,t)}^{MaxMain} \qquad \forall t \in \{1,...,T\};$$
$$\forall b \in \{1,...,B\};$$
$$\forall sp \in \{1,...,SP\}$$

$$P_{(c,b,t)}^{Red} \leq P_{(c,b,t)}^{MaxRed} \qquad \forall t \in \{1,...,T\};$$
$$\forall i \in \{1,...,T\};$$
$$P_{(c,b,t,i)}^{Shift} \leq P_{(c,b,t,i)}^{MaxShift} \qquad \forall b \in \{1,...,B\};$$
$$\forall c \in \{1,...,C\}$$

where the following symbols represent:

$P^{MaxFlow}_{(b,k,t)}$ maximum power flow capacity, in period t, in the line connecting bus b to bus k;

$P^{MaxGen}_{(g,b,t)}$ maximum capacity of the generation component g in bus b in period t;

$P^{MaxMain}_{(sp,b,t)}$ maximum capacity of the main network external element of energy supply (7) sp in bus b in period t;

$P^{MinGen}_{(g,b,t)}$ minimum schedulable capacity of the generation component g in bus b in period t;

$P^{MaxRed}_{(c,b,t)}$ maximum capacity of consumption reduction in the consumption component c, in bus b and period t;

$P^{MaxShift}_{(c,b,t,i)}$ maximum capacity of consumption shifting in the consumption component c, in bus b, period t, and for period i.

**11.** Method according to any of the previous claims 6 to 10 **characterized in that** the following relations are respected:

$$X_{(s,b,t)}^{Stor} + Y_{(s,b,t)}^{Stor} \leq 1 \qquad \forall t \in \{1,...,T\};$$
$$\forall b \in \{1,...,B\};$$
$$\forall s \in \{1,...,S\};$$
$$X_{(s,b,t)}^{Stor} \text{ and } Y_{(s,b,t)}^{Stor} \in \{0,1\}$$

$$E_{(s,b,t)}^{Stor} = E_{(s,b,t-1)}^{Stor} + P_{(s,b,t)}^{Stor\_Ch} \times \Delta t - P_{(s,b,t)}^{Stor\_Dsc} \times \Delta t \qquad \forall t \in \{1,...,T\};$$
$$\forall b \in \{1,...,B\};$$
$$\forall s \in \{1,...,S\}$$

$$P_{(s,b,t)}^{Stor\_Ch} \leq P_{(s,b,t)}^{MaxStor\_Ch} \times Y_{(s,b,t)}^{Stor} \quad , \qquad \begin{array}{l} \forall t \in \{1,...,T\}; \\ \forall b \in \{1,...,B\}; \\ \forall s \in \{1,...,S\} \end{array}$$

$$P_{(s,b,t)}^{Stor\_Ch} \times \Delta t \leq E_{(s,b)}^{Stor\_Capacity} - E_{(s,b,t-1)}^{Stor} \quad , \qquad \begin{array}{l} \forall t \in \{1,...,T\}; \\ \forall b \in \{1,...,B\}; \\ \forall s \in \{1,...,S\} \end{array}$$

$$P_{(s,b,t)}^{Stor\_Dsc} \leq P_{(s,b,t)}^{MaxStor\_Dsc} \times X_{(s,b,t)}^{Stor} \quad , \qquad \begin{array}{l} \forall t \in \{1,...,T\}; \\ \forall b \in \{1,...,B\}; \\ \forall s \in \{1,...,S\} \end{array}$$

$$P_{(s,b,t)}^{Stor\_Dsc} \times \Delta t \leq E_{(s,b,t-1)}^{Stor} \quad , \qquad \begin{array}{l} \forall t \in \{1,...,T\}; \\ \forall b \in \{1,...,B\}; \\ \forall s \in \{1,...,S\} \end{array}$$

where the following symbols represent:

$X^{Stor}_{(s,b,t)}$ binary variable for the charge of the means for energy storage (8) s in bus b and period t;
$Y^{Stor}_{(s,b,t)}$ binary variable for the discharge of the means for energy storage (8) s in bus b and period t;
$E^{Stor}_{(s,b,t)}$ energy stored in the means for energy storage (8) s in bus b and period t;
$E^{Stor\_Capacity}_{(s,b)}$ maximum capacity of the means for energy storage (8) s in bus b and period t;
$P^{MaxStor\_Ch}_{(s,b,t)}$ maximum charge power of the means for energy storage (8) s in bus b and period t;
$P^{MaxStor\_Dsc}_{(s,b,t)}$ maximum discharge power of the means for energy storage (8) s in bus b and period t;
$\Delta t$ elementary optimization period duration.

12. Method according to any of the previous claims **characterized in that** each computational agent is defined according to one of the following three types:

• resource agent, corresponding to the computational representation of at least one electrical energy network component;
• low-level aggregation agent, corresponding to the computational representation of a set of at least two resource agents, representing a microgrid;
• high-level aggregation agent, corresponding to the computational representation of a set of at least one element, which can consist in:

  ○ resource agent;
  ○ low-level aggregation agent;
  ○ high-level aggregation agent;

**and in that** the simulation of at least one simulated electrical energy network element is performed in real-time or deferred.

13. System of control of electrical energy microgrid configured to implement the method of any the previous claims comprises the following elements:

• computational means (9) suitable for the maximization of the objective function and simulation of at least one simulated element of electrical energy;
• actuation means (10) suitable for the scheduling of the available resources;
• at least one database (12), suitable for containing historic data of energy generation elements (1) or energy consumption element (3) or any other elements constituting the microgrid.

**14.** System according to the previous claim **characterized in that** it further comprises means for emulation of load and generation of electrical energy (11), suitable for the emulation of the obtained simulation data from at least one simulated element of electrical energy network and, optionally, means for fault signalization (13).

**Patentansprüche**

**1.** Steuerungsverfahren von mindestens einem elektrischen Micronetz, welches folgende Schritte umfasst:

a) Datenerfassung aus mindestens einem Erzeugungssensor (2), der jeden, im Micronetz installierten elektrischen Energieerzeugungselement (1), zugeordnet ist;
b) Datenerfassung aus mindestens einem Verbrauchssensor (4) der jeden, im Micronetz installierten elektrischen Energieverbrauchselement (3), zugeordnet ist;
c) Computermittel (9) gestützte Simulation von mindestens einem simulierten Element von elektrischem Netzwerk, durch das Modellieren des besagten simulierten Elements, indem jedes simulierte Element durch einen rechnergestützten Agent repräsentiert wird, jedes simulierte Element besteht aus einer Einrichtung, die nicht im Micronetz installiert ist, aber dessen Verhaltensweise simuliert wird;
d) Computermittel (9) gestützte Darstellung jedes elektrischen Energieerzeugungselements (1), welches im Micronetz installiert ist und jedes elektrischen Energieverbrauchselement (3), welches im Micronetz installiert ist, durch einen rechnergestützten Agent, durch die Daten, die von dem besagten mindestens einen Erzeugungssensor (2) und den besagten mindestens einen Verbrauchssensor (4), die zu jedem der vorherigen zugeordnet sind, erfasst werden;
e) mit der Eingabe der Repräsentationen des rechnergestützen Agents aus Schritten c) und d), Computermittel (9) gestützte Maximierung einer Zielfunktion, welche aus der Summe der folgenden Komponenten besteht:

i) die Leistung von allen externen Elementen von Energieversorgung (7);
ii) die Leistung von allen Erzeugungskomponenten, welche all die Energieerzeugungselemente (1) und simulierte Erzeugungselemente (5) umfassen;
iii) die Leistung von allen Verbrauchskomponenten, welche all die Energieverbrauchselemente (3) und simulierte Verbrauchselemente (6) umfassen;
iv) die Leistung von allen Energiespeicherungsmitteln (8);

f) Betätigung der verfügbaren Ressourcen, dessen Planung, je nach dem Ergebnis, welches in Schritt e) erhalten wurde.

**2.** Verfahren nach vorherigem Anspruch, **dadurch gekennzeichnet, dass** Schritt c) folgende Schritte umfasst:

• Emulation in Mittel für Emulation von Ladung und Erzeugung von elektrischer Energie (11) der Daten, die von der Simulation von mindestens einem simulierten Element des elektrischen Netzwerks resultieren;
• Überprüfen der erreichten Ergebnisse, indem diese mit den erwarteten Simulationsergebnissen verglichen werden, falls diese verschieden sind, Aktivierung von Mitteln zur Fehlersignalisierung (13).

**3.** Verfahren nach jedem der vorherigen Ansprüche, **dadurch gekennzeichnet, dass** das simulierte Element aus mindestens einem der folgenden Elemente besteht:

• simulierte Erzeugungselemente (5) von elektrischer Energie;
• simulierte Verbrauchselemente (6) von elektrischer Energie;
• simuliertes Verdrahtungselement;
• simuliertes Stromwandlerelement;
• simuliertes externes Element von Energieversorgung;
• simuliertes Energiespeicherelement.

**4.** Verfahren nach jedem der vorherigen Ansprüche, **dadurch gekennzeichnet, dass** die Simulation von dem mindestens einem simulierten Element des elektrischen Netzwerks, durch Modellieren dieses Elements, durch die historische Datenspeichrung in einer Datenbank (12) ausgeführt wird.

**5.** Verfahren nach jedem der vorherigen Ansprüche, **dadurch gekennzeichnet, dass** die Komponenten in der Zielfunktion für alle simulierten und eigentlichen Busse in dem Micronetz addiert werden, sowie auch für alle vordefinierten zukünftigen Perioden und jedes der Leistungswerte von i) bis iv) wird mit mindestens einem Gewichtsparameter multipliziert.

6. Verfahren nach jedem der vorherigen Ansprüche, **dadurch gekennzeichnet, dass** die Leistung von all den Erzeugungskomponenten wie folgt bestimmt wird:

$$\sum_{g=1}^{G} \left( P_{(g,b,t)}^{Gen\ 2} \times W_{(g,b,t)}^{Gen\_A} + P_{(g,b,t)}^{Gen} \times W_{(g,b,t)}^{Gen\_B} + W_{(g,b,t)}^{Gen\_C} \times X_{(g,b,t)}^{Gen} + P_{(g,b,t)}^{EAP} \times W_{(g,b,t)}^{EAP} \right)$$

worin die folgenden Symbole wie folgt darstellen:

$P_{(g,b,t)}^{Gen\ 2}$ die geplante Leistung für Erzeugungskomponente $g$ in Bus $b$, in Periode $t$;

$P_{(g,b,t)}^{EAP}$ die verfügbare Überschussleistung für Erzeugungskomponente $g$ in Bus $b$, in Periode $t$;

$X_{(g,b,t)}^{Gen}$ binäre Variable, in Bezug auf die Nutzung der Erzeugungskomponente $g$ in Bus $b$, in Periode $t$;

$W_{(g,b,t)}^{EAP}$ der Gewichtsparameter, in Bezug auf die verfügbare Überschussleistung für Erzeugungskomponente $g$ in Bus $b$, in Periode $t$;

$W_{(g,b,t)}^{Gen\_A}$ der quadratische Gewichtsparameter, in Bezug auf die Leistung für Erzeugungskomponente $g$ in Bus $b$, in Periode $t$;

$W_{(g,b,t)}^{Gen\_B}$ der lineare Gewichtsparameter, in Bezug auf die Leistung für Erzeugungskomponente $g$ in Bus $b$, in Periode $t$;

$W_{(g,b,t)}^{Gen\_C}$ der Grundgewichtsparameter, in Bezug auf die Leistung für Erzeugungskomponente $g$ in Bus $b$, in Periode $t$.

7. Verfahren nach jedem der Ansprüche 5 und 6, **dadurch gekennzeichnet, dass** die Leistung von all den Verbrauchskomponenten wie folgt bestimmt wird:

$$\sum_{c=1}^{C} \left( P_{(c,b,t)}^{Red} \times W_{(c,b,t)}^{Red} + \sum_{i=1}^{I} P_{(c,b,t,i)}^{Shift} \times W_{(c,b,t,i)}^{Shift} + P_{(c,b,t)}^{NSD} \times W_{(c,b,t)}^{NSD} \right)$$

worin die folgenden Symbole wir folgt darstellen:

$b$ jeder Bus in dem Netzwerk;
$t$ jede Kontrollperiode zur Optimierung;
$i$ jedes Verbrauchsverschiebungsperiode;
$I$ die maximale Anzahl von Verbrauchsverschiebungsperioden;
$c$ jede Verbrauchskomponente;
$C$ die Gesamtzahl der Verbrauchskomponenten;

$W_{(c,b,t)}^{NSD}$ der Gewichtsparameter, in Bezug auf die nicht gelieferten Nachfrage in der Verbrauchskomponente $c$, in Bus $b$, in Periode $t$;

$W_{(c,b,t)}^{Red}$ der Gewichtsparameter, in Bezug auf die Verbrauchsreduzierung in der Verbrauchskomponente $c$, in Bus $b$, in Periode $t$;

$W_{(c,b,t,i)}^{Shift}$ der Gewichtsparameter, in Bezug auf die Verbrauchsverschiebung in der Verbrauchskomponente $c$, in Bus $b$, in Periode $t$ und für Periode $i$;

$P_{(c,b,t)}^{NSD}$ die nicht gelieferte geplante Nachfrage in der Verbrauchskomponente $c$, in Bus $b$, in Periode $t$;

$P_{(c,b,t)}^{Red}$ die geplante Verbrauchsleistungreduzierung in der Verbrauchskomponente $c$, in Bus $b$, in Periode $t$;

$P^{Shift}_{(c,b,t,i)}$ die geplante Verbrauchleistungverschiebung in der Verbrauchskomponente *c*, in Bus *b*, in Periode t und für Periode *i*;

8. Verfahren nach jedem der Ansprüche 5 bis 7, **dadurch gekennzeichnet, dass** die Leistung von all den Mitteln für Energiespeicherung (8) wie folgt bestimmt wird:

$$\sum_{s=1}^{S} \left( P^{Stor\_Dsc}_{(s,b,t)} \times W^{Stor\_Dsc}_{(s,b,t)} - P^{Stor\_Ch}_{(s,b,t)} \times W^{Stor\_Ch}_{(s,b,t)} \right)$$

worin die folgenden Symbole wie folgt darstellen:

*b* jeder Bus in dem Netzwerk;
*t* jede Kontrollperiode zur Optimierung;
*s* jedes Mittel für Energiespeicherung (8);
*S* die maximale Anzahl von Mitteln für Energiespeicherung (8);

$W^{Stor\_Ch}_{(s,b,t)}$ das Gewicht in Bezug auf die Ladung der Mittel für Energiespeicherung (8) *s*, in Bus *b*, in Periode *t*;

$W^{Stor\_Dsc}_{(s,b,t)}$ das Gewicht, in Bezug auf die Entladung der Mittel für Energiespeicherung (8) *s*, in Bus *b*, in Periode *t*;

$P^{Stor\_Ch}_{(s,b,t)}$ die geplante Leistungsladung der Mittel für Energiespeicherung (8) *s*, in Bus *b*, in Periode *t*;

$P^{Stor\_Dsc}_{(s,b,t)}$ die geplante Leistungsentladung der Mittel für Energiespeicherung (8) *s*, in Bus *b*, in Periode *t*.

9. Verfahren nach jedem der Ansprüche 6 bis 8, **dadurch gekennzeichnet, dass** das Leistungsgleichgewicht in jeder Periode *t* und in jedem Bus *b* Null ist, indem sich folgendes Verhältnis überprüfen lässt:

$$\sum_{sp=1}^{SP} P^{Main}_{(sp,b,t)} + \sum_{g=1}^{G} \left( P^{Gen}_{(g,b,t)} - P^{EAP}_{(g,b,t)} \right)$$
$$+ \sum_{c=1}^{C} \left( P^{Red}_{(c,b,t)} + \sum_{i=1}^{I} P^{Shift}_{(c,b,t,i)} + P^{NSD}_{(c,b,t)} - P^{Demand}_{(c,b,t)} \right)$$
$$+ \sum_{s=1}^{S} \left( P^{Stor\_Dsc}_{(s,b,t,i)} - P^{Stor\_Ch}_{(s,b,t)} \right) + \sum_{bk=1}^{NL} \left( P^{Flow}_{(b,k,t)} - P^{Flow}_{(k,l,t)} \right) = 0$$

worin die folgenden Symbole wie folgt darstellen:

$P^{Demand}_{(c,b,t)}$ prognostizierte Nachfrage in der Verbrauchskomponente *c*, in Bus *b*, und in Periode *t*;

$P^{Flow}_{(b,k,t)}$ Leistungsfluss in Bus in Periode *t*, in der Leitung die Bus *b* mit Bus *k* verbindet;

$P^{Flow}_{(k,l,t)}$ Leistungsfluss in Bus in Periode *t*, in der Fernleitung die Bus *b* mit Bus *l* verbindet; sowie alle möglichen Busse in dem gezielten Micronetz.

10. Verfahren nach jedem der Ansprüche 6 bis 9, **dadurch gekennzeichnet, dass** folgende Verhältnisse eingehalten werden:

$$P^{Load}_{(c,b,t)} = P^{Demand}_{(c,b,t)} - P^{Red}_{(c,b,t)} - \sum_{i=1}^{I} P^{Shift}_{(c,b,t,i)} - P^{NSD}_{(c,b,t)} \qquad \begin{aligned} &\forall t \in \{1,\dots,T\};\\ &\forall i \in \{1,\dots,I\};\\ &\forall b \in \{1,\dots,B\};\\ &\forall c \in \{1,\dots,C\} \end{aligned}$$

$$P^{Flow}_{(b,k,t)} \leq P^{MaxFlow}_{(b,k,t)} \qquad \begin{aligned} &\forall t \in \{1,\dots,T\};\\ &\forall bk \in \{1,\dots,NL\} \end{aligned}$$

$$P^{MinGen}_{(g,b,t)} \leq P^{Gen}_{(g,b,t)} \leq P^{MaxGen}_{(g,b,t)} \qquad \begin{aligned} &\forall t \in \{1,\dots,T\};\\ &\forall b \in \{1,\dots,B\};\\ &\forall g \in \{1,\dots,G\} \end{aligned}$$

$$P^{Main}_{(sp,b,t)} \leq P^{MaxMain}_{(sp,b,t)} \qquad \begin{aligned} &\forall t \in \{1,\dots,T\};\\ &\forall b \in \{1,\dots,B\};\\ &\forall sp \in \{1,\dots,SP\} \end{aligned}$$

$$\begin{aligned} P^{Red}_{(c,b,t)} &\leq P^{MaxRed}_{(c,b,t)}\\ P^{Shift}_{(c,b,t,i)} &\leq P^{MaxShift}_{(c,b,t,i)} \end{aligned} \qquad \begin{aligned} &\forall t \in \{1,\dots,T\};\\ &\forall i \in \{1,\dots,I\};\\ &\forall b \in \{1,\dots,B\};\\ &\forall c \in \{1,\dots,C\} \end{aligned}$$

worin die folgenden Symbole wie folgt darstellen:

$P^{MaxFlow}_{(b,k,t)}$ maximale Leistungsflusskapazität, in Periode $t$, in der Leitung die Bus $b$ mit Bus $k$ verbindet;

$P^{MaxGen}_{(g,b,t)}$ maximale Kapazität der Erzeugungskomponente $g$ in bus $b$ in Periode $t$;

$P^{MaxMain}_{(sp,b,t)}$ maximale Kapazität des externen Hauptnetzwerkselement der Energieversorgung (7) $sp$ in bus $b$ in Periode $t$;

$P^{MinGen}_{(g,b,t)}$ minimale geplante Kapazität der Erzeugungskomponente $g$ in bus $b$ in Periode $t$;

$P^{MaxRed}_{(c,b,t)}$ maximale Kapazität der Verbrauchsreduzierung in Verbrauchskomponente $c$, in Bus $b$ und Periode $t$;

$P^{MaxShift}_{(c,b,t,i)}$ maximale Kapazität der Verbrauchsverschiebung in Verbrauchskomponente $c$, in Bus $b$, Periode $t$ und für Periode $i$;

**11.** Verfahren nach jedem der Ansprüche 6 bis 10, **dadurch gekennzeichnet, dass** folgende Verhältnisse eingehalten werden:

$$X^{Stor}_{(s,b,t)} + Y^{Stor}_{(s,b,t)} \leq 1 \qquad \begin{aligned} &\forall t \in \{1,\dots,T\};\\ &\forall b \in \{1,\dots,B\};\\ &\forall s \in \{1,\dots,S\};\\ &X^{Stor}_{(s,b,t)} \text{ und } Y^{Stor}_{(s,b,t)} \in \{0,1\} \end{aligned}$$

$$E_{(s,b,t)}^{Stor} = E_{(s,b,t-1)}^{Stor} + P_{(s,b,t)}^{Stor\_Ch} \times \Delta t - P_{(s,b,t)}^{Stor\_Dsc} \times \Delta t$$

$$\forall t \in \{1, \ldots, T\};$$
$$\forall b \in \{1, \ldots, B\};$$
$$\forall s \in \{1, \ldots, S\}$$

$$P_{(s,b,t)}^{Stor\_Ch} \leq P_{(s,b,t)}^{MaxStor\_Ch} \times Y_{(s,b,t)}^{Stor}$$

$$\forall t \in \{1, \ldots, T\};$$
$$\forall b \in \{1, \ldots, B\};$$
$$\forall s \in \{1, \ldots, S\}$$

$$P_{(s,b,t)}^{Stor\_Ch} \times \Delta t \leq E_{(s,b)}^{Stor\_Capacity} - E_{(s,b,t-1)}^{Stor}$$

$$\forall t \in \{1, \ldots, T\};$$
$$\forall b \in \{1, \ldots, B\};$$
$$\forall s \in \{1, \ldots, S\}$$

$$P_{(s,b,t)}^{Stor\_Dsc} \leq P_{(s,b,t)}^{MaxStor\_Dsc} \times X_{(s,b,t)}^{Stor}$$

$$\forall t \in \{1, \ldots, T\};$$
$$\forall b \in \{1, \ldots, B\};$$
$$\forall s \in \{1, \ldots, S\}$$

$$P_{(s,b,t)}^{Stor\_Dsc} \times \Delta t \leq E_{(s,b,t-1)}^{Stor}$$

$$\forall t \in \{1, \ldots, T\};$$
$$\forall b \in \{1, \ldots, B\};$$
$$\forall s \in \{1, \ldots, S\}$$

worin die folgenden Symbole wie folgt darstellen:

$X_{(s,b,t)}^{Stor}$ binäre Variable für die Ladung der Mittel für Energiespeicherung (8) $s$, in Bus $b$ und Periode $t$;

$Y_{(s,b,t)}^{Stor}$ binäre Variable für die Entladung der Mittel für Energiespeicherung (8) $s$, in Bus $b$ und Periode $t$;

$E_{(s,b,t)}^{Stor}$ gespeicherte Energie in den Mitteln für Energiespeicherung (8) $s$, in Bus $b$ und Periode $t$;

$E_{(s,b)}^{Stor\_Capacity}$ maximale Kapazität der Mittel für Energiespeicherung (8) $s$, in Bus $b$ und Periode $t$;

$P_{(s,b,t)}^{MaxStor\_Ch}$ maximale Ladeleistung der Mittel für Energiespeicherung (8) $s$, in Bus $b$ und Periode $t$;

$P_{(s,b,t)}^{MaxStor\_Dsc}$ maximale Entladeleistung der Mittel für Energiespeicherung (8) $s$, in Bus $b$ und Periode $t$;

$\Delta t$ elementare Dauer der Optimierungsperiode.

12. Verfahren nach jedem der vorherigen Ansprüche, **dadurch gekennzeichnet, dass** jeder computergesteuerte Agent nach einem der folgenden drei Arten bestimmt wird:

• Ressourceagent, der der rechnergestützten Repräsentation von mindestens einer elektrischen Energienetzwerkkomponente entspricht;
• Niedriger Aggregationsagent, der der rechnergestützten Repräsentation von einer Reihe von mindestens zwei Ressourceagenten, die ein Micronetz darstellen, entspricht;
• Hoher Aggregationsagent, der der rechnergestützten Repräsentation von einer Reihe von mindestens einem Element entspricht, welcher aus folgendem bestehen kann:

∘ Ressourceagent;
∘ Niedriger Aggregationsagent;
∘ Hoher Aggregationsagent;

**und, dass** die Simulation von mindestens einem simulierten elektrischen Energienetzwerkelement in Echtzeit ausgeführt wird oder verzögert wird.

13. Steuerungssystem eines elektrischen Energiemicronetzes eingestellt, um das Verfahren jedes der vorherigen Ansprüche umzusetzten folgende Elemente umfasst:

• Computermittel (9) geeignet für die Maximierung der Zielfunktion und Simulation von mindestens einem simulierten Element von elektrischer Energie;
• Betätigungsmittel (10) geeignet für die Planung der verfügbaren Ressourcen;
• mindestens eine Datenbank (12), geeignet um historische Daten der Energieerzeugungselemente (1) oder Energieverbrauchselemente (3) oder alle sonstigen Elemente, die das Micronetz bilden, zu enthalten.

14. System nach vorherigem Anspruch, **dadurch gekennzeichnet, dass** es weiterhin Mittel für die Emulation von Ladung und Erzeugung von elektrischer Energie (11) umfasst, geeignet für die Emulation der erhaltenen Simulationsdaten von mindestens einem simulierten Element des elektrischen Energienetzwerks und, optional, Mittel für die Fehlersignalisierung (13).


**Revendications**

1. Procédé de contrôle d'au moins un miniréseau électrique comprenant les étapes suivantes:

a) acquisition de données à partir d'au moins un capteur de génération (2) associé à chacun élément de génération d'énergie électrique (1) installé dans le miniréseau;
b) acquisition de données à partir d'au moins un capteur de consommation (4) associé à chacun élément de consommation d'énergie électrique (3) installé dans le miniréseau;
c) simulation, dans des moyens de calcul (9), d'au moins un élément simulé de réseau électrique, par la modélisation dudit élément simulé, étant chacun élément simulé représenté par un agent de calcul, chacun élément simulé consistant en un équipement non installé dans le miniréseau mais dont le comportement est simulé;
d) représentation, dans des moyens de calcul (9), de chaque élément de génération d'énergie électrique (1) installé dans le miniréseau et chaque élément de consommation d'énergie électrique (3) installé dans le miniréseau par un agent de calcul, à travers les données acquis dudit au moins un capteur de génération (2) et dudit au moins une capteur de consommation (4) associé à chacun d'eux;
e) dès que les représentations de l'agent de calcul ont été entrées à partir des étapes c) et d), maximisation, dans des moyens de calcul (9), d'une fonction objective qui consiste sur la somme des composants suivants:

i) la puissance de tous les éléments externes d'approvisionnement énergétique (7);
ii) la puissance de tous les composants de la génération, y compris tous les éléments de génération d'énergie (1) et les éléments simulés de génération (5);
iii) la puissance de tous les composants de consommation, y compris tous les éléments de consommation d'énergie (3) et éléments simulés de consommation (6);
iv) la puissance de tous les moyens de stockage d'énergie (8);

f) actionnement sur les ressources disponibles, en programmant celles-ci en fonction du résultat obtenu à l'étape e).

2. Procédé selon la revendication précédente, **caractérisé en ce que** l'étape c) comprend les étapes suivantes:

• émulation, dans des moyens d'émulation de charge et de génération d'énergie électrique (11), des données résultant de la simulation d'au moins un élément simulé de réseau électrique;
• vérification des résultats obtenus, en les comparant avec les résultats attendues de la simulation et, en cas de différences, activation de moyens de signalisation de défaut (13).

3. Procédé selon l'une quelconque des revendications précédentes, **caractérisé en ce que** l'élément simulé consiste en au moins un des éléments suivants:

    • élément simulé de génération (5) d'énergie électrique;
    • élément simulé de consommation (6) d'énergie électrique;
    • élément simulé de câblage;
    • élément simulé de transformateur;
    • élément externe simulé d'approvisionnement en énergie;
    • élément simulé de stockage d'énergie.

4. Procédé selon l'une quelconque des revendications précédentes, **caractérisé en ce que** la simulation du au moins un élément simulé de réseau électrique, par la modélisation de cet élément, est effectuée à travers des données historiques stockées dans une base de données (12).

5. Procédé selon l'une quelconque des revendications précédentes, **caractérisé en ce que** les composants de la fonction objective sont additionnés pour tous les bus simulés et réels dans le miniréseau, ainsi que pour toutes les périodes futures prédéfinies, et, par quelconque des valeurs de puissance en i) à iv), est multipliée par au moins un paramètre de pondération.

6. Procédé selon la revendication précédente, **caractérisé en ce que** la puissance de tous les composants de génération est déterminée par:

$$\sum_{g=1}^{G} \left( P_{(g,b,t)}^{Gen\ 2} \times W_{(g,b,t)}^{Gen\_A} + P_{(g,b,t)}^{Gen} \times W_{(g,b,t)}^{Gen\_B} + W_{(g,b,t)}^{Gen\_C} \times X_{(g,b,t)}^{Gen} + P_{(g,b,t)}^{EAP} \times W_{(g,b,t)}^{EAP} \right)$$

où les symboles suivants représentent:

$P_{(g,b,t)}^{Gen\ 2}$ la puissance programmée pour le composant de génération $g$ dans le bus $b$, en période $t$;

$P_{(g,b,t)}^{EAP}$ la puissance excédentaire disponible pour le composant de génération $g$ dans le bus $b$, en période $t$;

$X_{(g,b,t)}^{Gen}$ variable binaire liée à la utilisation du composant de génération $g$ dans le bus $b$, en période $t$;

$W_{(g,b,t)}^{EAP}$ le paramètre de pondération lié à la puissance excédentaire disponible pour le composant de génération $g$ dans le bus $b$, en période $t$;

$W_{(g,b,t)}^{Gen\_A}$ le paramètre de pondération quadratique lié à la puissance du composant de génération $g$ dans le bus $b$, en période $t$;

$W_{(g,b,t)}^{Gen\_B}$ le paramètre de pondération linéaire lié à la puissance du composant de génération $g$ dans le bus $b$, en période $t$;

$W_{(g,b,t)}^{Gen\_C}$ le paramètre de pondération de base lié à la puissance du composant de génération $g$ dans le bus $b$, en période $t$.

7. Procédé selon l'une quelconque des revendications 5 et 6, **caractérisé en ce que** la puissance de tous les composants de consommation est déterminée par:

$$\sum_{c=1}^{C} \left( P_{(c,b,t)}^{Red} \times W_{(c,b,t)}^{Red} + \sum_{i=1}^{I} P_{(c,b,t,i)}^{Shift} \times W_{(c,b,t,i)}^{Shift} + P_{(c,b,t)}^{NSD} \times W_{(c,b,t)}^{NSD} \right)$$

où les symboles suivants représentent:

    $b$ chaque bus dans le réseau;
    $t$ chaque période de contrôle d'optimisation;
    $i$ chaque période de changement de consommation;

$l$ le nombre maximum de périodes de changement de consommation;

$c$ chaque composant de consommation;

$C$ le nombre total de composants de consommation;

$W_{(c,b,t)}^{NSD}$ le paramètre de pondération lié à la demande non fournie dans le composant de consommation $c$ dans le bus $b$, en période $t$;

$W_{(c,b,t)}^{Red}$ le paramètre de pondération lié à la réduction de consommation dans le composant de consommation $c$ dans le bus $b$, en période $t$;

$W_{(c,b,t,i)}^{Shift}$ le paramètre de pondération lié à le changement de consommation dans le composant de consommation $c$ dans le bus $b$, en période $t$ et pour la période $i$;

$P_{(c,b,t)}^{NSD}$ la demande programmée non fournie dans le composant de consommation $c$ dans le bus $b$, en période $t$;

$P_{(c,b,t)}^{Red}$ la puissance de réduction de consommation programmée dans le composant de consommation $c$ dans le bus $b$, en période $t$;

$P_{(c,b,t,i)}^{Shift}$ la puissance de changement de consommation programmée dans le composant de consommation $c$ dans le bus $b$, en période $t$ et pour la période $i$.

8. Procédé selon l'une quelconque des revendications 5 à 7, **caractérisé en ce que** la puissance de tous les moyens de stockage d'énergie (8) est déterminée par:

$$\sum_{s=1}^{S} \left( P_{(s,b,t)}^{Stor\_Dsc} \times W_{(s,b,t)}^{Stor\_Dsc} - P_{(s,b,t)}^{Stor\_Ch} \times W_{(s,b,t)}^{Stor\_Ch} \right)$$

où les symboles suivants représentent:

$b$ chaque bus dans le réseau;

$t$ chaque période de contrôle d'optimisation;

$s$ chaque moyen de stockage d'énergie (8);

$S$ le nombre maximum de moyens de stockage d'énergie (8);

$W_{(s,b,t)}^{Stor\_Ch}$ la pondération lié à la charge du moyen de stockage d'énergie (8) s dans le bus $b$, en période $t$;

$W_{(s,b,t)}^{Stor\_Dsc}$ la pondération lié à la décharge du moyen de stockage d'énergie (8) $s$ dans le bus $b$, en période $t$;

$P_{(s,b,t)}^{Stor\_Ch}$ la puissance de charge programmée du moyen de stockage d'énergie (8) $s$ dans le bus $b$, en période $t$;

$P_{(s,b,t)}^{Stor\_Dsc}$ la puissance de décharge programmée du moyen de stockage d'énergie (8) $s$ dans le bus $b$, en période $t$.

9. Procédé selon l'une quelconque des revendications 6 à 8, **caractérisé en ce que** l'équilibre de puissance dans quelconque période $t$ et dans quelconque bus $b$ est nul, vérifiant la relation suivante

$$\sum_{sp=1}^{SP} P_{(sp,b,t)}^{Main} + \sum_{g=1}^{G} \left( P_{(g,b,t)}^{Gen} - P_{(g,b,t)}^{EAP} \right)$$
$$+ \sum_{c=1}^{C} \left( P_{(c,b,t)}^{Red} + \sum_{i=1}^{I} P_{(c,b,t,i)}^{Shift} + P_{(c,b,t)}^{NSD} - P_{(c,b,t)}^{Demand} \right)$$
$$+ \sum_{s=1}^{S} \left( P_{(s,b,t,i)}^{Stor\_Dsc} - P_{(s,b,t)}^{Stor\_Ch} \right) + \sum_{bk=1}^{NL} \left( P_{(b,k,t)}^{Flow} - P_{(k,l,t)}^{Flow} \right) = 0$$

où les symboles suivants représentent:

$P_{(c,b,t)}^{Demand}$ la demande prévue dans le composant de consommation *c* en bus *b*, et en période *t*;

$P_{(b,k,t)}^{Flow}$ flux de puissance dans le bus *b* en période *t*, dans la ligne reliant le bus *b* au bus *k*;

$P_{(k,l,t)}^{Flow}$ flux de puissance dans le bus en période *t*, dans la ligne à distance reliant le bus *b* au bus *l*, c'est-à-dire tous les bus possibles dans le miniréseau ciblé.

**10.** Procédé selon l'une quelconque des revendications 6 à 9, **caractérisé en ce que** les relations suivantes sont respectées:

$$P_{(c,b,t)}^{Load} = P_{(c,b,t)}^{Demand} - P_{(c,b,t)}^{Red} - \sum_{i=1}^{I} P_{(c,b,t,i)}^{Shift} - P_{(c,b,t)}^{NSD} \quad \begin{array}{l} \forall t \in \{1,\dots,T\}; \\ \forall i \in \{1,\dots,I\}; \\ \forall b \in \{1,\dots,B\}; \\ \forall c \in \{1,\dots,C\} \end{array}$$

$$P_{(b,k,t)}^{Flow} \le P_{(b,k,t)}^{MaxFlow} \quad \begin{array}{l} \forall t \in \{1,\dots,T\}; \\ \\ \forall bk \in \{1,\dots,NL\} \end{array}$$

$$P_{(g,b,t)}^{MinGen} \le P_{(g,b,t)}^{Gen} \le P_{(g,b,t)}^{MaxGen} \quad \begin{array}{l} \forall t \in \{1,\dots,T\}; \\ \\ \forall b \in \{1,\dots,B\}; \\ \\ \forall g \in \{1,\dots,G\} \end{array}$$

$$P_{(sp,b,t)}^{Main} \le P_{(sp,b,t)}^{MaxMain} \quad \begin{array}{l} \forall t \in \{1,\dots,T\}; \\ \\ \forall b \in \{1,\dots,B\}; \\ \\ \forall sp \in \{1,\dots,SP\} \end{array}$$

$$\begin{array}{l} P_{(c,b,t)}^{Red} \le P_{(c,b,t)}^{MaxRed} \\ \\ P_{(c,b,t,i)}^{Shift} \le P_{(c,b,t,i)}^{MaxShift} \end{array} \quad \begin{array}{l} \forall t \in \{1,\dots,T\}; \\ \forall i \in \{1,\dots,I\}; \\ \forall b \in \{1,\dots,B\}; \\ \forall c \in \{1,\dots,C\} \end{array}$$

où les symboles suivants représentent:

$P_{(b,k,t)}^{MaxFlow}$ capacité de flux de puissance maximale, en période *t* dans la ligne reliant le bus *b* au bus *k*;

$P_{(g,b,t)}^{MaxGen}$ capacité maximale du composant de génération *g* dans le bus *b*, en période *t*;

$P_{(sp,b,t)}^{MaxMain}$ capacité maximale de l'élément externe de l'approvisionnement énergétique (7) *sp* du réseau principal, dans le bus *b* en période *t*;

$P_{(g,b,t)}^{MinGen}$ capacité programmable minimale du composant de génération *g* dans le bus *b*, en période *t*;

$P_{(c,b,t)}^{MaxRed}$ capacité maximale de réduction de consommation, dans le composant de consommation c dans le bus *b*, en période *t*;

$P_{(c,b,t,i)}^{MaxShift}$ capacité maximale de changement de consommation, dans le composant de consommation *c* dans le bus *b*, en période *t* et pour la période *i*.

**11.** Procédé selon l'une quelconque des revendications précédentes 6 à 10, **caractérisé en ce que** les relations suivantes sont respectées:

$$X_{(s,b,t)}^{Stor} + Y_{(s,b,t)}^{Stor} \leq 1 \qquad \begin{aligned} &\forall t \in \{1, \dots, T\}; \\ &\forall b \in \{1, \dots, B\}; \\ &\forall s \in \{1, \dots, S\}; \\ &X_{(s,b,t)}^{Stor} \text{ et } Y_{(s,b,t)}^{Stor} \in \{0,1\} \end{aligned}$$

$$E_{(s,b,t)}^{Stor} = E_{(s,b,t-1)}^{Stor} + P_{(s,b,t)}^{Stor\_Ch} \times \Delta t - P_{(s,b,t)}^{Stor\_Dsc} \times \Delta t \qquad \begin{aligned} &\forall t \in \{1, \dots, T\}; \\ &\forall b \in \{1, \dots, B\}; \\ &\forall s \in \{1, \dots, S\} \end{aligned}$$

$$P_{(s,b,t)}^{Stor\_Ch} \leq P_{(s,b,t)}^{MaxStor\_Ch} \times Y_{(s,b,t)}^{Stor} \qquad \begin{aligned} &\forall t \in \{1, \dots, T\}; \\ &\forall b \in \{1, \dots, B\}; \\ &\forall s \in \{1, \dots, S\} \end{aligned}$$

$$P_{(s,b,t)}^{Stor\_Ch} \times \Delta t \leq E_{(s,b)}^{Stor\_Capacity} - E_{(s,b,t-1)}^{Stor} \qquad \begin{aligned} &\forall t \in \{1, \dots, T\}; \\ &\forall b \in \{1, \dots, B\}; \\ &\forall s \in \{1, \dots, S\} \end{aligned}$$

$$P_{(s,b,t)}^{Stor\_Dsc} \leq P_{(s,b,t)}^{MaxStor\_Dsc} \times X_{(s,b,t)}^{Stor} \qquad \begin{aligned} &\forall t \in \{1, \dots, T\}; \\ &\forall b \in \{1, \dots, B\}; \\ &\forall s \in \{1, \dots, S\} \end{aligned}$$

$$P_{(s,b,t)}^{Stor\_Dsc} \times \Delta t \leq E_{(s,b,t-1)}^{Stor} \qquad \begin{aligned} &\forall t \in \{1, \dots, T\}; \\ &\forall b \in \{1, \dots, B\}; \\ &\forall s \in \{1, \dots, S\} \end{aligned}$$

où les symboles suivants représentent:

$X_{(s,b,t)}^{Stor}$ variable binaire pour la charge du moyen de stockage d'énergie (8) *s* en bus *b*, et en période *t*;

$Y_{(s,b,t)}^{Stor}$ variable binaire pour la décharge du moyen de stockage d'énergie (8) *s* en bus *b*, et en période *t*;

$E_{(s,b,t)}^{Stor}$ énergie stockée dans le moyen de stockage d'énergie (8) *s* en bus *b*, et en période *t*; $E_{(s,b)}^{Stor\_Capacity}$

capacité maximale du moyen de stockage d'énergie (8) s en bus *b*, et en période *t*; $P_{(s,b,t)}^{MaxStor\_Ch}$ puissance de charge maximale du moyen de stockage d'énergie (8) *s* en bus *b*, et en période *t*;

$P_{(s,b,t)}^{MaxStor\_Dsc}$ puissance de décharge maximale du moyen de stockage d'énergie (8) *s* en bus *b*, et en période *t*;

$\varDelta t$ durée de la période d'optimisation élémentaire.

12. Procédé selon l'une quelconque des revendications précédentes, **caractérisé en ce que** chaque agent de calcul est défini selon l'un des trois types suivants:

• agent de ressources, correspondant à la représentation informatique d'au moins un composant de réseau d'énergie électrique;
• agent d'agrégation de bas niveau, correspondant à la représentation informatique d'un ensemble d'au moins deux agents de ressources, représentant un microréseau;
• agent d'agrégation de haut niveau, correspondant à la représentation informatique d'un ensemble d'au moins un élément pouvant consister en:

∘ agent de ressources;
∘ agent d'agrégation de bas niveau;
∘ agent d'agrégation de haut niveau;

et **en ce que** la simulation d'au moins un élément simulé de réseau d'énergie électrique est effectué en temps réel ou différé.

13. Système de contrôle de miniréseau d'énergie électrique, configuré pour mettre en oeuvre le procédé d'une quelconque des revendications précédentes, comprenant les éléments suivants:

• des moyens de calcul (9) adaptés à la maximisation de la fonction objective et à la simulation d'au moins un élément simulé d'énergie électrique;
• des moyens d'actionnement (10) adaptés à la programmation des ressources disponibles;
• au moins une base de données (12) adaptée pour contenir des données historiques d'éléments de génération d'énergie (1) ou d'éléments de consommation d'énergie (3), ou tout autre élément constituant le miniréseau.

14. Système selon la revendication précédente, **caractérisé en ce qu'**il comprend en outre des moyens d'émulation de charge et de génération d'énergie électrique (11), adaptés à la émulation des données de simulation obtenues, à partir d'au moins un élément simulé de réseau d'énergie électrique et, éventuellement, des moyens de signalisation de défaut (13).

Figure 1

Figure 2

actuation on the available resources, scheduling them, according to the result obtained in step e)

maximization in computational means (9), of an objective function which consists on the sum of the following components:
i) the power from all the external elements of energy supply (7);
ii) the power of all the generation components, which includes all the energy generation elements (1) and simulated generation elements (5);
iii) the power from all the consumption components, which includes all the energy consumption elements (3) and simulated consumption elements (6);
iv) the power from all the means for energy storage (8);

acquisition of data from at least one generation sensor (2) associated to each electrical energy generation element (1) installed in the microgrid

acquisition of data from at least one consumption sensor (4) associated to each electrical energy consumption element (3) installed in the microgrid

emulation in means for emulation of load and generation of electrical energy (11) of the data resulting from the simulation of at least one simulated element of electrical network

simulation in computational means (9) of at least one simulated element of electrical network, through the modelling of said simulated element, being each simulated element represented by a computational agent

Figure 3

27

**EP 3 113 313 B1**

**Patent documents cited in the description**

- US 20120316688 A1
- US 2013253718 A1
- US 20120010757 A
- US 20130282194 A
- US 20120065792 A
- US 20110082596 A
- US 20130178991 A